# EUROPEAN PATENT SPECIFICATION

(11) **EP 1 915 885 B1**
(45) Date of publication and mention of the grant of the patent: **14.05.2014**
(21) Application number: 06796765.3
(22) Date of filing: 18.08.2006
(51) Int. Cl.: H04W 76/02

(54) **MOBILE RADIO COMMUNICATIONS DEVICE AND RELATED METHOD AND SYSTEM**
MOBILES FUNKKOMMUNIKATIONSGERÄT UND ENTSPRECHENDES VERFAHREN UND SYSTEM
DISPOSITIF DE RADIOCOMMUNICATIONS MOBILES, PROCEDE ET SYSTEME CONNEXES

(30) Priority: 18.08.2005 GB 0516985
(43) Date of publication of application: 30.04.2008
(60) Divisional application: 14162008.8
(73) Proprietor: NEC Corporation, Minato-ku Tokyo 108-8001 (JP)
(72) Inventor: ROBERTS, Michael, 92200 Neuilly Sur Seine (FR)
(74) Representative: Gill, David Alan
(86) International application number: PCT/JP2006/316670
(87) International publication number: WO 2007/021036

(56) References cited:
- WO-A1-03/058988
- JP-A- 2004 328 521
- US-A1- 2005 068 990
- "UE capabilities during simultaneous HSDPA/E-DCH use", 3GPP DRAFT; R2-051407, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20050504, 4 May 2005 (2005-05-04), XP050128612, [retrieved on 2005-05-04]
- "Universal Mobile Telecommunications System (UMTS); Radio Resource Control (RRC) protocol specification (3GPP TS 25.331 version 6.6.0 Release 6); ETSI TS 125 331", IEEE, LIS, SOPHIA ANTIPOLIS CEDEX, FRANCE, vol. 3-R2, no. V6.6.0, 1 June 2005 (2005-06-01), XP014030569, ISSN: 0000-0001
- "Use of HSDPA and EDCH for CS signalling", 3GPP DRAFT; R2-052022 USE OF HSDPA AND EDCH FOR CS SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050824, 24 August 2005 (2005-08-24), XP050129157, [retrieved on 2005-08-24]

## Description

The present invention relates to a mobile radio communications device and related method and system employing a mobile radio communications device network.

Mobile radio communication device networks employ a variety of forms of signalling for exchanges between the mobile radio communications devices connected to the network and network elements such as the radio network controller. For current so-called third generation networks, the Third Generation Partnership Project (3GPP) has defined, by way of an on-going series of releases, a variety of standards to which network operators and equipment suppliers must conform.

Within a mobile radio communications device network, a requirement for Circuit Switch (CS) signalling often arises although the current manner of user equipment and network operation and signalling is such as to exhibit disadvantageous limitations.

For example, from the release R99 according to the 3GPP, problems arise in relation to the Dedicated Physical Channel (DPCH) employed in accordance with that release. For example, it is found that, at a transmission speed of 3.4 kbps, the DPCH can prove disadvantageously slow leading likewise to a disadvantageous delay in CS call set-up times. Yet further, CS signalling capacity limitations are also experienced.

Further, through the use of an Enhanced Uplink Dedicated Channel (EDCH) and which is found from the release Rel-6 of the 3GPP specification, further limitations can arise relating to the Radio Network Controller (RNC) processing load. In accordance with Rel-6, the RNC is required to allocate a R99 DPCH and also an EDCH in order to increase the signalling speed. Of course, in order to achieve such allocation of the R99 DPCH and the EDCH, it is necessary to disadvantageously double the Radio Resource Management (RRM) requirements.

Also, although F-DPCH was introduced in Rel-6 in an attempt to limit code resource requirements within the packet switched domain, the above-mentioned problems associated with the use of the DPCH in relation to the CS domain have not been addressed.

The above-mentioned problems lead to disadvantageous performance limitations and inefficiencies.

The present invention seeks to provide for a mobile radio communications device and related method and system of operation, and related network devices, having advantages over known such devices, methods and systems.

According to a first aspect of the present invention, there is provided a mobile radio communications device arranged to support at least one of a High Speed Downlink Packet Access channel and an Enhanced Uplink Dedicated channel, the mobile radio communications device including: means for signalling, to a network controller, support of the at least one of the High Speed Downlink Packet Access channel and the Enhanced Uplink Dedicated Uplink channel supported by the mobile radio communications device; means for determining that a circuit switched connection is required, wherein the mobile radio communications device is arranged to signal the said support of the at least one of the High Speed Downlink Packet Access channel and the Enhanced Uplink Dedicated channel when said determining means has determined that said circuit switched connection is required; and means for receiving from the network controller of a mobile radio communications device information relating to an allocation, by the network controller, of at least one High Speed Downlink Packet Access channel or Enhanced Uplink Dedicated channel supported by the mobile radio communications device, for circuit switched signalling exchanges.

Preferably, the said means for determining that a circuit switched connection is required includes means for signalling from the mobile radio communications device that such a circuit switched connection is required.

According to another aspect of the present invention, there is provided a network controller device for a mobile radio communications network, the network controller device including: means for allocating, responsive to receipt of signalling from a mobile radio communications device indicating support for at least one of a High Speed Downlink Packet Access channel and an Enhanced Uplink Dedicated channel, a respective High Speed Downlink Packet Access channel or Enhanced Uplink Dedicated channel to the mobile radio communications device for the exchange of circuit switched signalling.

Advantageously, the network controller device can be arranged to subsequently allocate a circuit switched bearer for circuit switched signalling exchanges with a mobile radio communications device.

In particular, the network controller as arranged to allocate a conventional dedicated channel for subsequent handling of the ongoing circuit switched signalling exchange.

Yet further the radio network controller can be arranged to modify measurement requirements within a cell so as to employ a cell configuration having regard to the particular circuit switched signals.

According to yet a further aspect of the present invention, there is provided a method, performed by a mobile radio communications device arranged to support at least one of a High Speed Downlink Packet Access channel and an Enhanced Uplink Dedicated channel, of providing circuit switched signalling between the mobile radio communications device and a network controller within a mobile radio communications network, the method including: determining that a circuit switched connection is required; signalling to the network controller, when it has been determined that the circuit switched connection is required, support of the at least one of the High Speed Downlink Packet Access channel and the Enhanced Uplink Dedicated Uplink channel supported by the mobile radio communications device; receiving, from the network controller of the mobile radio communications device, information relating to an allocation, by the network controller, of at least one High Speed Downlink Packet Access channel or Enhanced Uplink Dedicated channel supported by the mobile radio communications device, for circuit switched signalling exchanges; and employing one of the High Speed Downlink Packet Access channel and the Enhanced Uplink Dedicated channel for providing the circuit switched signalling accordingly.

In particular either one of the said channels can be employed at least for the initial stages of the circuit switched signalling.

In this manner, subsequent to an initial phase of the circuit switched signalling the method can include the step of using a conventional circuit switched connection for the ongoing circuit switched signalling exchanges.

The method can also include the step of the mobile radio communications device signalling its support of at least one of the said channels to a network controller within the network and, can subsequently comprise a step of at the network controller within the network responding to the said signalling of the support for the channels by allocating at least one of the said channels for the circuit switched signalling.

Yet further, the method can include the step of modifying, at a radio network controller, measurement requirements for a cell in order to configure the cell for the circuit switched signalling required.

According to a still further aspect of the present invention, there is provided a mobile radio communications system comprising at least one of a mobile radio communications device as defined above, and a network controller device as defined above.

According to another further aspect of the present invention, there is provided a method performed by a network controller device of a mobile radio communications network, the method including: allocating, responsive to receipt of signalling from a mobile radio communications device indicating support for at least one of a High Speed Downlink Packet Access channel and an Enhanced Uplink Dedicated channel, a respective High Speed Downlink Packet Access channel or Enhanced Uplink Dedicated channel to the mobile radio communications device for exchange of circuit switched signalling.

As will be appreciated from the further discussion below, the present invention is advantageous since, in allowing for a selection of High Speed Downlink Packet Access and/or Enhanced Uplink Dedicated Channel bearers for initial circuit switched signalling exchanges, the above-mentioned speed limitations and inefficiencies can advantageously be reduced.

To enhance the manner in which the present invention provides an improvement to the prior art discussed above, it is advantageous that the mobile radio communications device indicate as early as possible its support for the High Speed Downlink Packet Access channel and/or the Enhanced Uplink Dedicated Channel so that the radio network controller can then allocate such channels for circuit switch signalling in a timely fashion.

The present invention is advantageously arranged to take advantage of signalling-support characteristics of a High Speed Downlink Packet Access channel or an Enhanced Uplink Dedicated Channel and arranged for use in relation to circuit switched signalling.

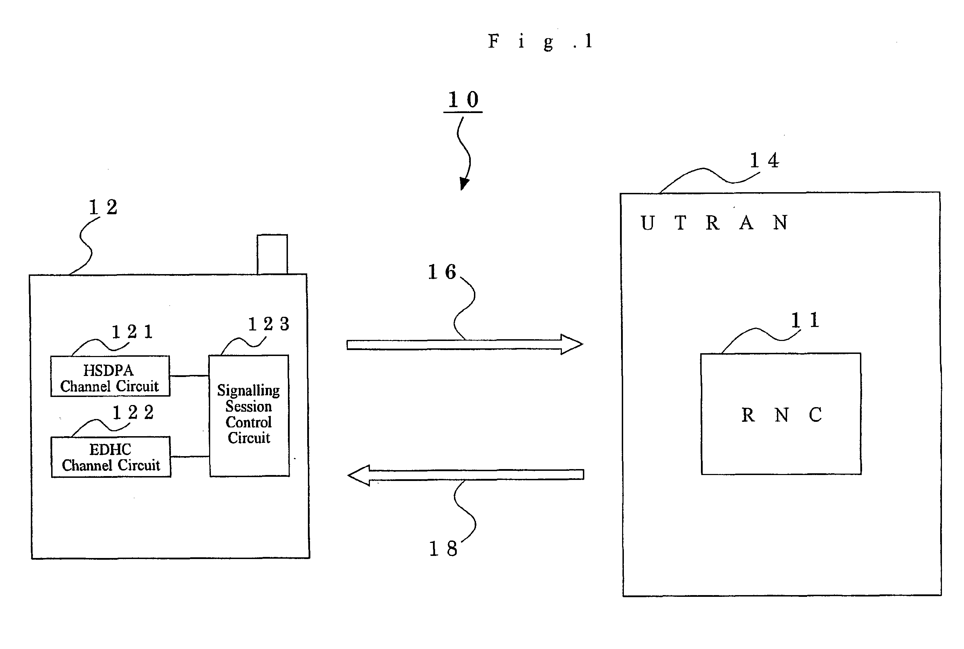

The invention is described further hereinafter with reference to the accompanying drawing in which illustrates a radio communications device system, and related operational elements, according to an embodiment of the present invention.

Within Fig.l, there is illustrated a mobile radio communications system 10 as part of a mobile radio communications network and employing user equipment 12 in the form of a mobile radio communications device handset a UMTS Terrestrial Radio Access Network (UTRAN) 14 and, signalling 16, 18 arising in accordance with an embodiment of the present invention for establishment of signal switched signalling.

Initially, when the user handset 12 is required to send a connection management service request for establishing circuit switched signalling, which of course may arise either through responding to paging signals received at the handset 12 or, through the handset 12 seeking to initiate the communication session. The handset 12 is arranged to indicate its support for HSDPA and/or EDCH channels. It includes HSDPA channel circuit 121 and EDCH channel circuit 122. Such signalling is indicated by arrow 16 and is delivered to a RNC 11 of the UTRAN 14. The handset 12 is further arranged to provide an indication that a circuit switched signalling session control circuit 123 is also required.

The signaling session control circuit 123 carries the signalling to the RNC to support of at least one of the those channel and determines a circuit switched connection between the HSDPA channel circuit 121 or EDCH channel circuit 122 which is required.

Upon receipt of the signal 16 from the signalling session control circuit 123 of the handset 12, the RNC 11 within the UTRAN 14 is arranged to employ such information immediately to select HSDPA and/or EDCH bearers which are then allocated to the handset 12 for support of the required circuit switched signalling exchanges.

The initial stages of the circuit switched signalling from the signaling session control circuit 123 of the handset 12 to the network therefore occur on one of the HSDPA and EDCH channel circuits 121 and 122, and so the speed-limitations and inefficiencies arising within the prior-art are therefore advantageously reduced.

During subsequent operation of the initial stages of the circuit switched signalling exchanges, and once the conventional circuit switched bearer is located for allocation to the signalling exchange, the RNC 11 can be arranged to allocate such a conventional Dedicated Control Channel (DCCH) and other related Dedicated Channels (DCH) and upon which the ongoing circuit switched signalling exchanges can continue.

Through the support of HSDPA and EDCH channels at the handset 12, it will be appreciated that advantageously relatively high speeds, for example 2Mbps for HSDPA cat.5 channels, and EDCH channels, are available. As a further aspect of the illustrated embodiment, the RNC 11 within the UTRAN 40 can be arranged to modify the measurement requirements to adapt cell configuration having regard to the particular circuit switched services required.

Thus, as can be appreciated the concept of the present invention, by employing HSDPA and EDCH bearers to carry CS signalling between a mobile radio communications device and a related network, can lead to advantages in the manner in which at least initial stages of CS signalling from a handset are handled.

## Claims

1. A mobile radio communications device (12) arranged to support at least one of a High Speed Downlink Packet Access channel and an Enhanced Uplink Dedicated channel, the mobile radio communications device (12) including:
means for signalling, to a network controller (11), support of the at least one of the High Speed Downlink Packet Access channel and the Enhanced Uplink Dedicated channel supported by the mobile radio communications device (12);
means for determining that a circuit switched connection is required, wherein the mobile radio communications device (12) is arranged to signal the said support of the at least one of the High Speed Downlink Packet Access channel and the Enhanced Uplink Dedicated Uplink channel when said determining means has determined that said circuit switched connection is required; and
means for receiving from the network controller (11) of a mobile radio communications device (12) information relating to an allocation, by the network controller (11), of at least one High Speed Downlink Packet Access channel or Enhanced Uplink Dedicated channel supported by the mobile radio communications device (12), for circuit switched signalling exchanges.

2. A mobile radio communications device (12) as claimed in Claim 1, wherein the said means for determining that a circuit switched connection is required comprises means for signalling from the mobile radio communications device (12) that such a circuit switched connection is required.

3. A network controller device (11) for a mobile radio communications network (10), the network controller device (11) including:
means for allocating, responsive to receipt of signalling from a mobile radio communications device (12) indicating support for at least one of a High Speed Downlink Packet Access channel and an Enhanced Uplink Dedicated channel, a respective High Speed Downlink Packet Access channel or Enhanced Uplink Dedicated channel to the mobile radio communications device (12) for the exchange of circuit switched signalling.

4. A network controller device (11) as claimed in Claim 3, and arranged to allocate a circuit switched bearer for subsequent circuit switched signalling exchanges with a mobile radio communications device (12).

5. A network controller device (11) as claimed in Claim 4and arranged to allocate a conventional dedicated channel for subsequent handling of the ongoing circuit switched signalling exchange.

6. A radio network controller device (11) as claimed in Claim 3, 4 or 5, and arranged to modify requirements within a cell so as to employ a cell configuration having regard to the particular circuit switched signals.

7. A method, performed by a mobile radio communications device (12) arranged to support at least one of a High Speed Downlink Packet Access channel and an Enhanced Uplink Dedicated channel, of providing circuit switched signalling between the mobile radio communications device (12) and a network controller (11) within a mobile radio communications network (10), the method including:
determining that a circuit switched connection is required;
signalling (16) to the network controller (11), when it has been determined that the circuit switched conncetion is required, support of the at least one of the High Speed Downlink Packet Access channel and the Enhanced Uplink Dedicated Uplink channel supported by the mobile radio communications device (12);
receiving (18), from the network controller (11) of the mobile radio communications device (12), information relating to an allocation, by the network controller (11), of at least one High Speed Downlink Packet Access channel or Enhanced Uplink Dedicated channel supported by the mobile radio communications device (12), for circuit switched signalling exchanges; and
employing one of the High Speed Downlink Packet Access channel and the Enhanced Uplink Dedicated channel for providing the circuit switched signalling accordingly.

8. A method as claimed in Claim 7, wherein at least one of the said channels is employed at least for the initial part of the circuit switched signalling.

9. A method as claimed in claim 8, and subsequent to an initial phase of the circuit switched signalling, including the step of using a conventional circuit switched connection for the ongoing circuit switched signalling exchange.

10. A method as claimed in claim 7, 8 or 9, and including the step of the mobile radio communications device (12) signalling its support of at least one of the said channels to the network controller (11) within the network (10), and a step of, at the network controller (11) within the network (10), responding to the said signalling of the support for the channels by allocating at least one of the said channels for the circuit switched signalling.

11. A method .as claimed in Claim 7, 8, 9 or 10, and including the step of modifying, at the radio network controller (11), measurement requirements for a cell in order to configure the cell for the circuit switched signalling required.

12. A mobile radio communications system comprising at least one of a mobile radio communications device (12) as claimed in Claim 1 or 2, and a network controller device (11) as claimed in anyone or more of Claims 3 to 6.

13. A method performed by a network controller device (11) of a mobile radio communications network (10), the method including: allocating, responsive to receipt of signalling from a mobile radio communications device (12) indicating support for at least one of a High Speed Downlink Packet Access channel and an Enhanced Uplink Dedicated channel, a respective High Speed Downlink Packet Access channel or Enhanced Uplink Dedicated channel to the mobile radio communications device (12) for exchange of circuit switched signalling.

## Patentansprüche

1. Mobilfunkkommunikationsgerät (12) zum Unterstützen eines HSDPA-(High Speed Downlink Packet Access)-Kanals und/oder eines EUD-(Enhanced Uplink Dedicated)-Kanals, wobei das Mobilfunkkommunikationsgerät (12) Folgendes beinhaltet:
Mittel, um einer Netzwerksteuerung (11) Unterstützung für den von dem Mobilfunkkommunikationsgerät (12) unterstützten High Speed Downlink Packet Access Kanal und/oder Enhanced Uplink Dedicated Kanal zu signalisieren;
Mittel zum Ermitteln, ob eine leitungsgeschaltete Verbindung erforderlich ist, wobei das Mobilfunkkommunikationsgerät (12) zum Signalisieren der genannten Unterstützung des High Speed Downlink Packet Access Kanals und/oder Enhanced Uplink Dedicated Kanals ausgelegt ist, wenn das genannte Ermittlungsmittel ermittelt hat, dass die genannte leitungsgeschaltete Verbindung erforderlich ist; und
Mittel zum Empfangen, von der Netzwerksteuerung (11) eines Mobilfunkkommunikationsgeräts (12), von Informationen über eine Zuordnung, durch die Netzwerksteuerung (11), eines von dem Mobilfunkkommunikationsgerät (12) unterstützten High Speed Downlink Packet Access Kanals und/oder Enhanced Uplink Dedicated Kanals für einen leitungsgeschalteten Signalaustausch.

2. Mobilfunkkommunikationsgerät (12) nach Anspruch 1, wobei das genannte Mittel zum Ermitteln, ob eine leitungsgeschaltete Verbindung erforderlich ist, Mittel zum Signalisieren von dem Mobilfunkkommunikationsgerät (12) umfasst, dass eine solche leitungsgeschaltete Verbindung erforderlich ist.

3. Netzsteuergerät (11) für ein Mobilfunkkommunikationsnetz (10), wobei das Netzsteuergerät (11) Folgendes beinhaltet:
Mittel zum Zuordnen, als Reaktion auf den Empfang von Signalen von einem Mobilfunkkommunikationsgerät (12), die die Unterstützung für einen High Speed Downlink Packet Access Kanal und/oder Enhanced Uplink Dedicated Kanal anzeigen, eines jeweiligen High Speed Downlink Packet Access Kanals oder Enhanced Uplink Dedicated Kanals zu dem Mobilfunkkommunikationsgerät (12) für den Austausch von leitungsgeschalteten Signalen.

4. Netzsteuergerät (11) nach Anspruch 3 zum Zuordnen eines leitungsgeschalteten Trägers für einen nachfolgenden leitungsgeschalteten Signalaustausch mit einem Mobilfunkkommunikationsgerät (12).

5. Netzsteuergerät (11) nach Anspruch 4 zum Zuordnen eines herkömmlichen dedizierten Kanals für eine nachfolgende Handhabung des laufenden leitungsgeschalteten Signalaustauschs.

6. Funknetzsteuergerät (11) nach Anspruch 3, 4 oder 5 zum Modifizieren von Anforderungen in einer Zelle, um eine Zellkonfiguration mit Bezug auf die jeweiligen leitungsgeschalteten Signale einzusetzen.

7. Verfahren, ausgeführt von einem Mobilfunkkommunikationsgerät (12), zum Unterstützen eines High Speed Downlink Packet Access Kanals und/oder eines Enhanced Uplink Dedicated Kanals, zum Bereitstellen von leitungsgeschalteten Signalen zwischen dem Mobilfunkkommunikationsgerät (12) und einer Netzsteuerung (11) in einem Mobilfunkkommunikationsnetz (10), wobei das Verfahren Folgendes beinhaltet:
Ermitteln, ob eine leitungsgeschaltete Verbindung erforderlich ist;
Signalisieren (16), an die Netzsteuerung (11), wenn ermittelt wurde, dass die leitungsgeschaltete Verbindung erforderlich ist, von Unterstützung für den von dem Mobilfunkkommunikationsgerät (12) unterstützten High Speed Downlink Packet Access Kanal und/oder Enhanced Uplink Dedicated Kanal;
Empfangen (18), von der Netzwerksteuerung (11) des Mobilfunkkommunikationsgeräts (12), von Informationen über eine Zuordnung, durch die Netzsteuerung (11), eines von dem Mobilfunkkommunikationsgerät (12) unterstützten High Speed Downlink Packet Access Kanals und/oder Enhanced Uplink Dedicated Kanals für einen leitungsgeschalteten Signalaustausch; und
Verwenden des High Speed Downlink Packet Access Kanals oder Enhanced Uplink Dedicated Kanals zum entsprechenden Bereitstellen der leitungsgeschalteten Signale.

8. Verfahren nach Anspruch 7, wobei wenigstens einer der genannten Kanäle wenigstens für den Anfangsteil der leitungsgeschalteten Signalisierung verwendet wird.

9. Verfahren nach Anspruch 8, und nach einer Anfangsphase der leitungsgeschalteten Signalisierung, das den Schritt des Verwendens einer herkömmlichen leitungsgeschalteten Verbindung für den laufenden leitungsgeschalteten Signalaustausch beinhaltet.

10. Verfahren nach Anspruch 7, 8 oder 9, das den Schritt beinhaltet, dass das Mobilfunkkommunikationsgerät (12) der Netzsteuerung (11) in dem Netz (10) seine Unterstützung von wenigstens einem der genannten Kanäle signalisiert, und einen Schritt, an der Netzsteuerung (11) in dem Netz (10), des Antwortens auf die genannte Signalisierung der Unterstützung für die Kanäle durch Zuordnen von wenigstens einem der genannten Kanäle für die leitungsgeschaltete Signalisierung.

11. Verfahren nach Anspruch 7, 8, 9 oder 10, das den Schritt des Modifizierens, an der Funknetzsteuerung (11), von Messanforderungen für eine Zelle beinhaltet, um die Zelle für die benötigte leitungsgeschaltete Signalisierung zu konfigurieren.

12. Mobilfunkkommunikationssystem, das ein Mobilfunkkommunikationsgerät (12) nach Anspruch 1 oder 2 und/oder ein Netzsteuergerät (11) nach einem oder mehreren der Ansprüche 3 bis 6 umfasst.

13. Verfahren, das von einem Netzsteuergerät (11) eines Mobilfunkkommunikationsnetzes (10) ausgeführt wird, wobei das Verfahren Folgendes beinhaltet: Zuordnen, als Reaktion auf den Empfang von Signalen von einem Mobilfunkkommunikationsgerät (12), die Unterstützung für den High Speed Downlink Packet Access Kanal und/oder einen Enhanced Uplink Dedicated Kanal anzeigen, eines jeweiligen High Speed Downlink Packet Access Kanals oder Enhanced Uplink Dedicated Kanals zu dem Mobilfunkkommunikationsgerät (12) für den Austausch von leitungsgeschalteten Signalen.

## Revendications

1. Un dispositif de communication radio mobile (12) agencé de façon à prendre en charge au moins un canal parmi un canal à accès en mode paquets en liaison descendante haut débit et un canal dédié en liaison montante amélioré, le dispositif de communication radio mobile (12) comprenant :
un moyen de signalement, à un dispositif de commande de réseau (11), la prise en charge du au moins un canal parmi le canal à accès en mode paquets en liaison descendante haut débit et le canal dédié en liaison montante amélioré pris en charge par le dispositif de communication radio mobile (12),
un moyen de détermination qu'une connexion à commutation de circuits est requise, où le dispositif de communication radio mobile (12) est agencé de façon à signaler ladite prise en charge du au moins un canal parmi le canal à accès en mode paquets en liaison descendante haut débit et le canal dédié en liaison montante amélioré lorsque ledit moyen de détermination a déterminé que ladite connexion à commutation de circuits est requise, et
un moyen de réception, à partir du dispositif de commande de réseau (11) d'un dispositif de communication radio mobile (12), d'informations relatives à une attribution, par le dispositif de commande de réseau (11), d'au moins un canal parmi un canal à accès en mode paquets en liaison descendante haut débit ou un canal dédié en liaison montante amélioré pris en charge par le dispositif de communication radio mobile (12), pour des échanges de signalisation à commutation de circuits.

2. Un dispositif de communication radio mobile (12) selon la Revendication 1, où ledit moyen de détermination qu'une connexion à commutation de circuits est requise comprend un moyen de signalement à partir du dispositif de communication radio mobile (12) qu'une telle connexion à commutation de circuits est requise.

3. Un dispositif de commande de réseau (11) pour un réseau de communication radio mobile (10), le dispositif de commande de réseau (11) comprenant :
un moyen d'attribution, en réponse à la réception d'un signalement provenant d'un dispositif de communication radio mobile (12) indiquant une prise en charge d'au moins un canal parmi un canal à accès en mode paquets en liaison descendante haut débit et un canal dédié en liaison montante amélioré, d'un canal à accès en mode paquets en liaison descendante haut débit ou un canal dédié en liaison montante amélioré respectif au dispositif de communication radio mobile (12) pour l'échange d'une signalisation à commutation de circuits.

4. Un dispositif de commande de réseau (11) selon la Revendication 3, et agencé de façon à attribuer une porteuse à commutation de circuits à des échanges subséquents de signalisation à commutation de circuits avec un dispositif de communication radio mobile (12).

5. Un dispositif de commande de réseau (11) selon la Revendication 4 et agencé de façon à attribuer un canal dédié conventionnel à une gestion subséquente de l'échange en cours de signalisation à commutation de circuits.

6. Un dispositif de commande de réseau radio (11) selon la Revendication 3, 4 ou 5, et agencé de façon à modifier des exigences à l'intérieur d'une cellule de façon à employer une configuration de cellule en rapport avec les signaux à commutation de circuits particuliers.

7. Un procédé, exécuté par un dispositif de communication radio mobile (12) agencé de façon à prendre en charge au moins un canal parmi un canal à accès en mode paquets en liaison descendante haut débit et un canal dédié en liaison montante amélioré, de fourniture d'une signalisation à commutation de circuits entre le dispositif de communication radio mobile (12) et un dispositif de commande de réseau (11) à l'intérieur d'un réseau de communication radio mobile (10), le procédé comprenant :
la détermination qu'une connexion à commutation de circuits est requise,
le signalement (16) au dispositif de commande de réseau (11), lorsqu'il a été déterminé que le connexion à commutation de circuits est requise, de la prise en charge du au moins un canal parmi le canal à accès en mode paquets en liaison descendante haut débit et le canal dédié en liaison montante amélioré pris en charge par le dispositif de communication radio mobile (12),
la réception (18), à partir du dispositif de commande de réseau (11) du dispositif de communication radio mobile (12), d'informations relatives à une attribution, par le dispositif de commande de réseau (11), d'au moins un canal parmi un canal à accès en mode paquets en liaison descendante haut débit ou un canal dédié en liaison montante amélioré pris en charge par le dispositif de communication radio mobile (12), pour des échanges de signalisation à commutation de circuits, et
l'utilisation d'un canal parmi le canal à accès en mode paquets en liaison descendante haut débit et le canal dédié en liaison montante amélioré pour la fourniture en conséquence de la signalisation à commutation de circuits.

8. Un procédé selon la Revendication 7, où au moins un desdits canaux est utilisé au moins pour la partie initiale de la signalisation à commutation de circuits.

9. Un procédé selon la Revendication 8, et suite à une phase initiale de la signalisation à commutation de circuits, comprenant l'opération d'utilisation d'une connexion à commutation de circuits conventionnelle pour l'échange en cours de signalisation à commutation de circuits.

10. Un procédé selon la Revendication 7, 8 ou 9, et comprenant l'opération de signalement par le dispositif de communication radio mobile (12) de sa prise en charge d'au moins un desdits canaux au dispositif de commande de réseau (11) à l'intérieur du réseau (10), et une opération, au niveau du dispositif de commande de réseau (11) à l'intérieur du réseau (10), de réponse audit signalement de la prise en charge des canaux par l'attribution d'au moins un desdits canaux pour la signalisation à commutation de circuits.

11. Un procédé selon la Revendication 7, 8, 9 ou 10, et comprenant l'opération de modification, au niveau du dispositif de commande de réseau radio (11), d'exigences de mesure pour une cellule afin de configurer la cellule pour la signalisation à commutation de circuits requise.

12. Un système de communication radio mobile comprenant au moins un dispositif parmi un dispositif de communication radio mobile (12) selon la Revendication 1 ou 2 et un dispositif de commande de réseau (11) selon l'une quelconque ou plusieurs des Revendications 3 à 6.

13. Un procédé exécuté par un dispositif de commande de réseau (11) d'un réseau de communication radio mobile (10), le procédé comprenant : l'attribution, en réponse à la réception d'un signalement provenant d'un dispositif de communication radio mobile (12) indiquant une prise en charge d'au moins un canal parmi un canal à accès en mode paquets en liaison descendante haut débit et un canal dédié en liaison montante amélioré, d'un canal à accès en mode paquets en liaison descendante haut débit ou d'un canal dédié en liaison montante amélioré respectif au dispositif de communication radio mobile (12) pour un échange d'une signalisation à commutation de circuits.
